# EUROPEAN PATENT APPLICATION

(11) **EP 2 966 606 A1**
(43) Date of publication of application: **13.01.2016**
(21) Application number: 13876885.8
(22) Date of filing: 08.11.2013
(51) Int. Cl.: G06Q 20/06

(54) **PROPRIETARY-CURRENCY MANAGEMENT DEVICE, PROPRIETARY-CURRENCY MANAGEMENT METHOD, AND PROGRAM**

(30) Priority: 04.03.2013 JP 2013042181
(71) Applicant: Azuma, Yoshihiro, Tokyo 153-0043 (JP)
(72) Inventor: Azuma, Yoshihiro, Tokyo 153-0043 (JP)
(74) Representative: Ström & Gulliksson AB
(86) International application number: PCT/JP2013/080353
(87) International publication number: WO 2014/136319

(57) **Abstract**

To increase the use of storage media associated with a proprietary currency by making it possible to safely distribute such storage media to an unspecified large number of people; also, to make it easy to for a wide variety of businesses to implement advertising campaigns using such storage media. The proprietary-currency management device (10) in the present embodiment is provided with a validity management unit (211) and a proprietary-currency management unit (212). On the basis of prescribed conditions, the validity management unit (211) validates payments using a proprietary currency that has been associated in advance with each of one or more card media (C). The proprietary-currency management unit (212) manages additions to and subtractions from the value of each of the card media (C) with respect to the proprietary currency validated by the validity management unit (211).

## Description

### TECHNICAL FIELD

The present invention relates to a proprietary-currency management device, a proprietary-currency management method, and a program.

### BACKGROUND ART

Conventionally, electronic money cards with which a proprietary currency, such as electronic money, is managed have been distributed, with the popularization of electronic commerce micro-transactions. Information on the proprietary currency is associated and stored in such electronic money cards, and holders of the electronic money cards can easily perform payment with the electronic money through an IC chip built in the electronic money cards.

To spread such payment with the proprietary currency, Patent Document 1 discloses a technology related to an electronic money settlement device.

Patent Document 1: Japanese Unexamined Patent Application, Publication No. 2009-258853

### DISCLOSURE OF THE INVENTION

### Problems to be Solved by the Invention

However, in the conventional electronic money cards, the proprietary currency associated with the electronic money cards is used without any problem, even if unauthorized use by a third party is performed. In such a case, the business operators that issue the electronic money cards pay for the used proprietary currency.

Therefore, the business operators cannot easily distribute the electronic money cards to an unspecified number of people, even if they wish to use the electronic money cards as a tool for advertising campaigns. Therefore, electronic money cards have not been widely distributed.

Such circumstances apply not only to the electronic money cards, but also to the storage media associated with the proprietary currency (for example, a storage unit in a mobile terminal when the proprietary currency is used in an application of the mobile terminal).

The present invention has been made in view of the foregoing, and an objective is to encourage the spread of a storage medium associated with a proprietary currency, and to easily realize the advertising campaigns of a wide variety of business operators using the storage medium associated with a proprietary currency, with the safe distribution of the storage medium associated with a proprietary currency to an unspecified large number of people.

### Means for Solving the Problems

To achieve the above objective, the proprietary-currency management device of one aspect of the present invention includes
validity management means configured to perform management to validate payment with the proprietary currency associated with each of at least one or more storage media in advance, based on a predetermined condition, and
proprietary-currency management means configured to manage addition/subtraction of the amount of the proprietary currency validated by the validity management means for each of the storage media.

The proprietary-currency management device of another aspect of the present invention can further include
user registration receiving means configured to receive registration of a user for each of the storage media, wherein
the predetermined condition for validating the proprietary currency can include reception of the registration of the user by the user registration receiving means.

The proprietary-currency management device of another aspect of the present invention can further include
setting means configured to set the predetermined condition for validating the proprietary currency for each of the storage media.

In the proprietary-currency management device according to another aspect of the present invention,
the validity management means can validate the proprietary currency for each business operator who issues the storage medium.

The proprietary-currency management device of another aspect of the present invention can further include
charging means configured to control execution of charging processing of consideration of a product or a service, wherein,
when the consideration of a product or a service is paid with a predetermined storage medium associated with the proprietary currency validated by the validity management means,
the proprietary-currency management means can subtract the amount of the consideration using the proprietary currency associated with the predetermined storage medium, and
the charging means can control the execution of charging processing of the consideration using a predetermined exchange currency.

A proprietary-currency management method of one aspect of the present invention is
a proprietary-currency management method executed by a proprietary-currency management device that manages a proprietary currency, and the method includes
a validity management step for performing management to validate payment with the proprietary currency associated with each of at least one or more storage media in advance, based on a predetermined condition, and
a proprietary-currency management step for managing addition/subtraction of an amount of the proprietary currency validated in the validity management step, for each of the storage media.

A program of one aspect of the present invention causes
a computer that executes control of managing a proprietary currency to function as
validity management means configured to perform management to validate payment with a proprietary currency associated with each of at least one or more storage media in advance, based on a predetermined condition, and
proprietary-currency management means configured to manage addition/subtraction of an amount of the proprietary currency validated by the validity management means for each of the storage media.

### Effects of the Invention

According to the present invention, with safe distribution of a storage medium associated with a proprietary currency to an unspecified large number of people, the spreading of the storage medium associated with a proprietary currency can be encouraged, and advertising campaigns of a wide variety of business operators can be easily realized using the storage medium associated with the proprietary currency.

### BRIEF DESCRIPTION OF THE DRAWINGS

Fig. 1 is a diagram illustrating the configuration of a proprietary-currency management system to which a proprietary-currency management device according to an embodiment of the present invention is applied.
Fig. 2 is a block diagram illustrating the hardware configuration of a proprietary-currency management device of an embodiment of the present invention.
Fig. 3 is a function block diagram illustrating functional configurations for executing card processing of functional configurations of a proprietary-currency management device.
Fig. 4 is a diagram illustrating an example of a structure of a card number management table stored in the proprietary-currency management device of Fig. 2.
Fig. 5 is a diagram illustrating an example of a structure of a validation condition table stored in the proprietary-currency management device of Fig. 2.
Fig. 6 is a flowchart for describing the process of the card processing executed by the proprietary-currency management device of Fig. 2 having the functional configurations of Fig. 3.
Fig. 7 is a flowchart for describing the detailed process of consideration charging processing of the card processing of Fig. 6.

### PREFERRED MODE FOR CARRYING OUT THE INVENTION

Hereinafter, an embodiment of the present invention will be described with reference to the drawings.

### [Outline of Proprietary-currency Management System]

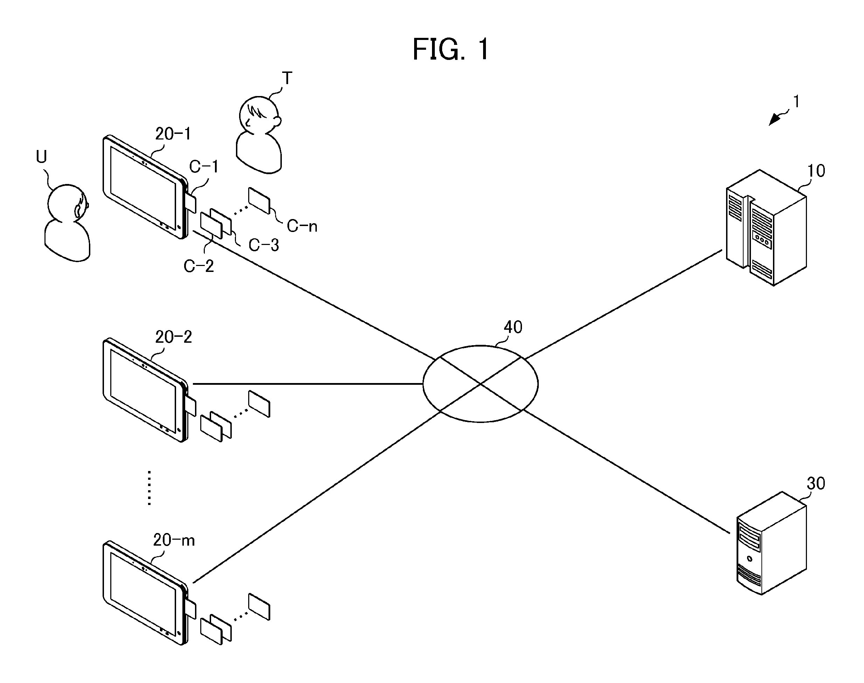

Fig. 1 illustrates a configuration of a proprietary-currency management system including a proprietary-currency management device according to an embodiment of the present invention.

The proprietary-currency management system 1 illustrated in Fig. 1 is configured such that a proprietary-currency management device 10, tablet terminals 20-1 to 20-m, and a charging server 30 are mutually connected through a network 40.

n card media C-1 to C-n (n is one or more arbitrary integer values) are issued by a business operator who provides a predetermined product or service. The card media C-1 to C-n are configured from an integrated circuit (IC) that can perform non-contact communication, and a magnetic card, and have a function of recording and calculating information (data). Hereinafter, the media are collectively called "card medium C" if there is no need to individually distinguish the card media C-1 to C-n.

A proprietary currency (point) available for payment of the provision of a product or a service by the business operator is associated with the card medium C. Here, "a proprietary currency is associated" does not mean that the proprietary currency is directly stored in the card medium C, but means that an available amount of the proprietary current, using the card medium C, is managed by the proprietary-currency management device 10.

That is, the card medium C has the intended purpose of use of the proprietary currency for the payment of consideration of the provision of a product or a service of the business operator. However, the card medium C does not store the proprietary currency itself, and only stores an identifier (card number) or the like for uniquely identifying itself.

Each of the m tablet terminals 20-1 to 20-m (m is one or more arbitrary integer values) is owned by the business operator. Here, for convenience of description, in the example of Fig. 1, the business operator provides a taxi dispatching service. In this case, the m tablet terminals 20-1 to 20-m are respectively distributed to m drivers who belong to the business operator. Note that, hereinafter, these tablet terminals 20-1 to 20-m are collectively called "tablet terminal 20" if there is no need to individually distinguish these tablet terminals.

The tablet terminal 20 is configured as a computer that has a processing function as a computer main body, a touch panel and several buttons as an input device, a display as a display device, and a speaker, in a plate housing.

Although not illustrated, the tablet terminal 20 includes a reader/writer unit, a communication unit, and a global positioning system (GPS) unit.

The reader/writer unit functions as a reader/writer of the card medium C, and can read information stored in the card medium C and can write various types of information to the card medium C by performing contact or non-contact communication with the IC incorporated in the card medium C.

The communication unit can perform communication for transmission/reception of various types of information, using Wi-Fi, for example, with another device (mainly with the proprietary-currency management device 10 in the example of Fig. 1) through the network 40.

The GPS unit calculates data indicating the current position of the tablet terminal 20, to be specific, data of longitude, latitude, and altitude (hereinafter, the data is collectively called "positional information"), based on GPS signals, upon receipt of the GPS signals from a plurality of GPS satellites. The positional information identifies the position where a payment action using the card C is performed (hereinafter, the position is called "place of the act").

Note that a technique of identifying the place of the act is not especially limited to the identification technique with the positional information based on the GPS. The technique of identifying the place of the act by the type of an exchange currency used at the time of settlement (a technique of identifying Japan if yen is used, and identifying Korea if won is used) can be employed.

The proprietary-currency management device 10 is configured from a server or the like that is managed by an operator different from the business operator, and manages the proprietary currency associated with the card medium C.

For example, in the present embodiment, a predetermined amount of the proprietary currency is associated with (given to) each card medium C in advance. The holder of the card medium C (a passenger U of a taxi described below, for example) can perform payment of consideration for provision of a service by the business operator using the proprietary currency associated with the card medium C.

Note that the payment with the proprietary currency is subject to validation of the card medium C. That is, a card medium C that is not validated cannot be used for the payment with the proprietary currency, even if a predetermined amount of the proprietary currency is associated with the card medium C.

Therefore, the proprietary currency associated with the card medium C is not used if the card medium C is in the unvalidated state, even if unauthorized use is intended by a third party. Therefore, with the safe distribution of the card medium C associated with the proprietary currency to an unspecified large number of people, the business operator can encourage the spreading of the card medium C associated with the proprietary currency, and advertising campaigns of a wide variety of business operators, can be easily realized using the card medium associated with the proprietary currency.

The proprietary-currency management device 10 manages such validation of each card medium C.

Furthermore, for example, the proprietary-currency management device 10 manages addition/subtraction of the amount of the validated proprietary currency for each card medium C.

To be specific, the proprietary-currency management device 10 uses the exchange currency of a predetermined basic region (the country that issues the card medium C, for example), as a key currency, and variably sets correspondence between the key currency and the proprietary currency, based on a predetermined condition. An exchange route of the proprietary currency (point) into the key currency (hereinafter, called "proprietary-currency rate") can be employed as the correspondence between the key currency and the proprietary-currency.

In the case where the place of the act is Korea, for example, the condition that the place of the act has a value of α (α is an arbitrary number of 0 or more), compared with a case where the place of the act is the basic region (Japan, for example) can be set as the predetermined condition. In this case, while the proprietary-currency rate of 1 point = 1 yen is set if the place of the act is Japan, for example, the proprietary rate of 1 point = 1 × α yen is set if the place of the act is Korea. Furthermore, the predetermined condition can be varied for each place of the act. That is, in a case where the place of the act is United State of America (U.S.A.), the condition that the place of the act has a value of β (β is an arbitrary value of 0 or more, which is different from α) can be set, compared with the case where the place of the act is the basic region (Japan, for example). In this case, while the proprietary-currency rate of 1 point = 1 yen is set if the place of the act is Japan, the proprietary rate of 1 point = 1 × β yen is set if the place of the act is U.S.A.

Furthermore, α and β can be variably set at arbitrary timing. For example, the proprietary-currency management device 10 can update the setting of α based on the exchange currency rate between yen and won (announced by some sort of public institution) at predetermined timing, such as at 9 o'clock every morning. Similarly, the proprietary-currency management device 10 can update the setting of β based on the exchange currency rate between yen and U.S. dollar (announced by some sort of public institution) at predetermined timing, such as at 9 o'clock every morning.

Alternatively, as the predetermined condition, the proprietary-currency management device 10 can set a different condition for each business operator who issues the card medium C, even if the place of the act is the same place. In this case, while the proprietary-currency rate of 1 point = 1 × γ yen is set when a company A is the payee, the proprietary-currency rate of 1 point - 1 × θ yen is set when a company B is the payee. Note that γ and θ are mutually different values, and are an arbitrary value of 0 or more.

The proprietary-currency management device 10 specifies the place of the act, and recognizes the amount of consideration of a product or a service paid with the card medium C, by the amount of the exchange currency of the place of the act.

The proprietary-currency management device 10 converts the recognized amount in the exchange currency of the place of the act (the amount recognized in won if the place of the act is Korea, for example) of the amount of the consideration of a product or a service paid with the card medium C into the amount of the proprietary currency (the number of points) based on the variably set proprietary-currency rate, and the exchange rate between the identified exchange currency of the place of the act and the key currency (1 won = 0.0834 yen, for example, if the place of the act is Korea).

The proprietary-currency management device 10 executes management to subtract the amount of the consideration of a product or a service paid with the card medium C using the proprietary currency associated with the card medium C.

At that time when the proprietary-currency management device 10 has subtracted the amount of the proprietary currency for the payment with the card medium C, the proprietary-currency management device 10 requests the charging server 30 to perform processing of charging the amount of subtraction using the exchange currency of the place of the act or the key currency (hereinafter, the processing is called "charging processing").

The charging server 30 executes the charging processing based on the request from the proprietary-currency management device 10. That is, the charging server 30 charges the subtracted amount of the proprietary currency for the payment with the card medium C using the exchange currency of the place of the act or the key currency.

Note that an executable object of the charging processing by the charging server 30 is not only the card medium C, but also an arbitrary medium such as an existing electronic money or credit card. In other words, the tablet terminal 20 can receive the payment for the provision of a service by the business operator not only with the card medium C, but also with an arbitrary medium, such as the existing electronic money or credit card.

The outline of an operation of such a proprietary-currency management system is as follows.

That is, for example, a driver T of a taxi who belongs to the business operator presents the tablet terminal 20 to the passenger U who is a holder of the card medium C at the time of payment of a taxi fare.

The passenger U or the driver T inserts the card medium C into the tablet terminal 20, and passes the card medium C through the tablet terminal 20.

Then, the series of processing below is executed, and the payment of the taxi fare is performed with the proprietary currency associated with the card medium C.

That is, the tablet terminal 20 reads the card number from the inserted card medium C, and transmits the read number to the proprietary-currency management device 10 through the network 40.

When the card number is received from the tablet terminal 20, the proprietary-currency management device 10 determines whether the card medium C corresponding to the card number is validated. After determined that the card medium C is validated, the proprietary-currency management device 10 recognizes the amount of consideration of the taxi service (the amount the taxi fare), converts the amount of the consideration into the amount of the proprietary-currency using the proprietary-currency rate or the exchange currency rate, subtracts the converted amount of the consideration (the number of points) with regard to the proprietary-currency (point), and requests the charging server 30 to perform the charging processing using the exchange currency of the place of the act or the key currency.

The charging server 30 charges the consideration of the taxi fare using a predetermined exchange currency (the exchange currency of the place of the act or the key currency).

### [Configuration of Proprietary-currency Management Device 10]

Next, details of a configuration of the proprietary-currency management device 10 of the proprietary-currency management system of Fig. 1, will be described.

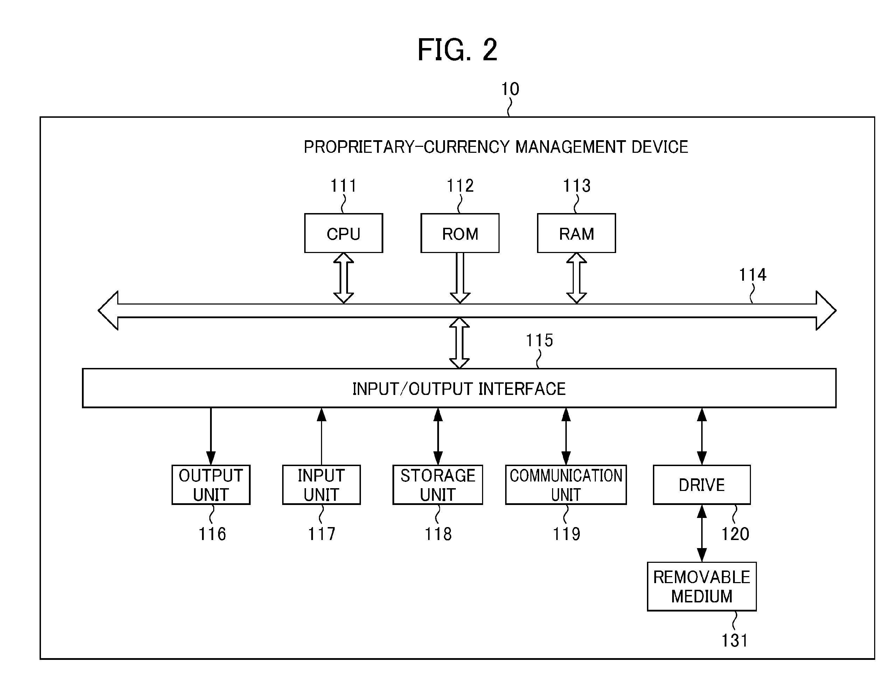

Fig. 2 is a block diagram illustrating a hardware configuration of a proprietary-currency management device of an embodiment of the present invention.

The proprietary-currency management device 10 includes a central processing unit (CPU) 111, a read only memory (ROM) 112, a random access memory (RAM) 113, a bus 114, an input/output interface 115, an output unit 116, an input unit 117, a storage unit 118, a communication unit 119, and a drive 120.

The CPU 111 executes various types of processing according to a program recorded in the ROM 112, or a program loaded from the storage unit 118 to the RAM 113.

Data and the like necessary for the CPU 111 to execute the various types of processing are also appropriately stored in the RAM 113.

The CPU 111, the ROM 112, and the RAM 113 are mutually connected through the bus 114. The input/output interface 115 is also connected with the bus 114. The output unit 116, the input unit 117, the storage unit 118, the communication unit 119, and the drive 120 are connected with the input/output interface 115.

The output unit 116 is configured from a display, a speaker, and the like, and outputs images and sounds.

The input unit 117 is configured from a keyboard, various buttons, and the like, and inputs various types of information according to an instruction operation of an operator.

The storage unit 118 is configured from a hard disk, a dynamic random access memory (DRAM), or the like, and stores various data.

The communication unit 119 controls communication performed with another device (the tablet terminal 20 or the charging server 30 in the example of Fig. 1) through the network 40 including the Internet.

A removable medium 131 is appropriately mounted to the drive 120, the removable medium 131 being made of a magnetic disk, an optical disk, a magneto-optical disk, a semiconductor memory, or the like. A program read by the drive 120 from the removable medium 131 is installed to the storage unit 118, as needed. Furthermore, the removable medium 131 can also store the various data stored in the storage unit 118, similarly to the storage unit 118.

The CPU 111 having such a configuration of the proprietary-currency management device 10 manages, with the notification of the card number, validation of payment of the associated proprietary currency with regard to the card medium C corresponding to the card number, and payment of consideration (the consideration of the taxi service in the above-described example) with the validated card medium C, that is, subtraction of the amount of the proprietary currency and request for the charging processing to the charging server 30.

Such a series of processing is hereinafter called "card processing". Furthermore, the processing associated with the latter management, of the "card processing", that is, a series of processing associated with the management of subtraction of the amount of the proprietary currency and the request of the charging processing to the charging server 30, which is performed for the payment of consideration, is hereinafter called "consideration charging processing".

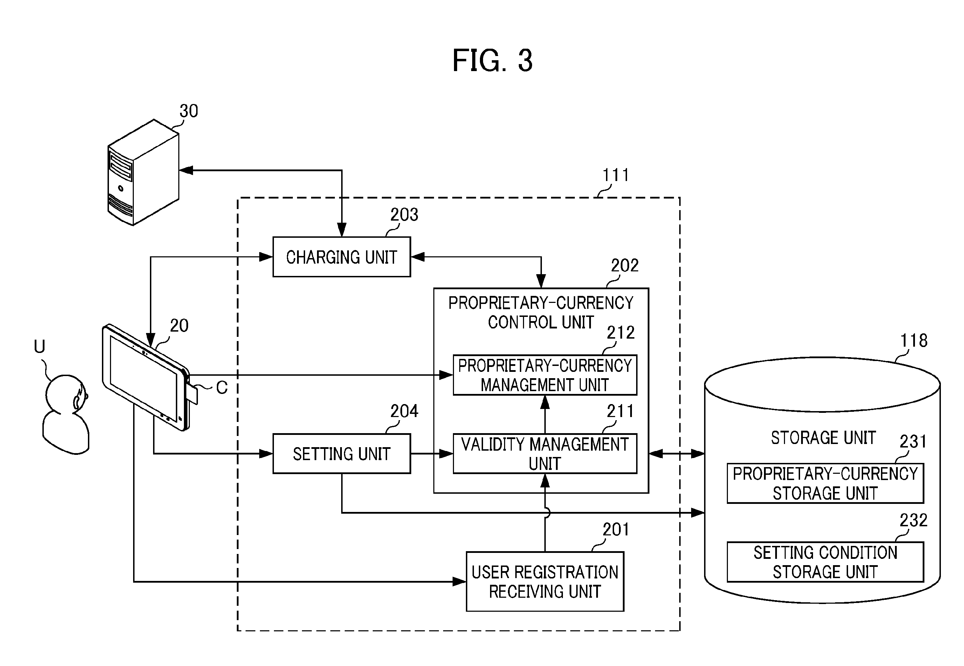

Fig. 3 is a function block diagram illustrating functional configurations for executing the card processing, of the functional configurations of the proprietary-currency management device 10.

When the execution of the card processing is controlled, a user registration receiving unit 201, a proprietary-currency control unit 202, a charging unit 203, and a setting unit 204 function in the CPU 111.

A proprietary-currency storage unit 231 and a setting condition storage unit 232 are provided as one region of the storage unit 118.

The user registration receiving unit 201 receives registration of a user for each card medium C.

For example, the passenger U operates an own terminal (not illustrated) or the tablet terminal 20 existing in the taxi that the passenger is in, and inputs information necessary for user registration, before using the card medium C as a user. The information necessary for user registration is only a user registration name (typically, the name of the passenger U) in the present embodiment, for convenience of description. However, the information is not especially limited thereto, and any combination of any arbitrary number of various types of information including the age, gender, address, postcode, telephone number, place of work, family structure, and the like, of the user, can be employed.

When the information is received by the communication unit 119 (Fig. 2) of the proprietary-currency management device 10 from the device (the terminal (not illustrated) of the passenger U or the tablet terminal 20 existing in the taxi that the passenger is in) through which the information necessary for user registration is input, the user registration receiving unit 201 stores the information in the proprietary-currency storage unit 231 together with information of the corresponding card medium C, as registration information of the user.

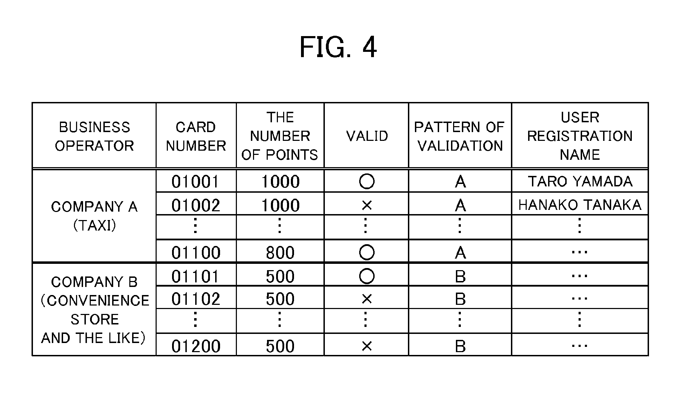

To be specific, a card number management table illustrated in Fig. 4 is stored in the proprietary-currency storage unit 231, and the registration information of the user is stored in predetermined items of the card number management table. Therefore, hereinafter, the card number management table will be described with reference to Fig. 4.

Fig. 4 is a diagram illustrating an example of the structure of the card number management table.

Various types of information including a business operator, the number of points, a validity flag, a pattern of validation, and the user registration name are stored in the card number management table, for each card number.

The business operator is an operator who provides a product or a service in exchange for consideration, and who issues the card C. In the example of Fig. 4, a taxi company (company A) similar to the example of Fig. 1, and a company (company B) who manages a convenience store, a restaurant chain, and the like are registered as the business operators.

The number of points indicates the amount of the proprietary currency of a case where points are employed as the proprietary-currency. In other words, the balance of each card medium C is indicated as the number of points.

The validity flag is a flag that indicates whether the payment with the proprietary currency is validated, that is, whether the payment of consideration is permitted. In the card number management table of Fig. 4, "○" is shown when the validity flag is ON (the payment is validated), and "×" is shown when the validity flag is OFF (the payment is not validated).

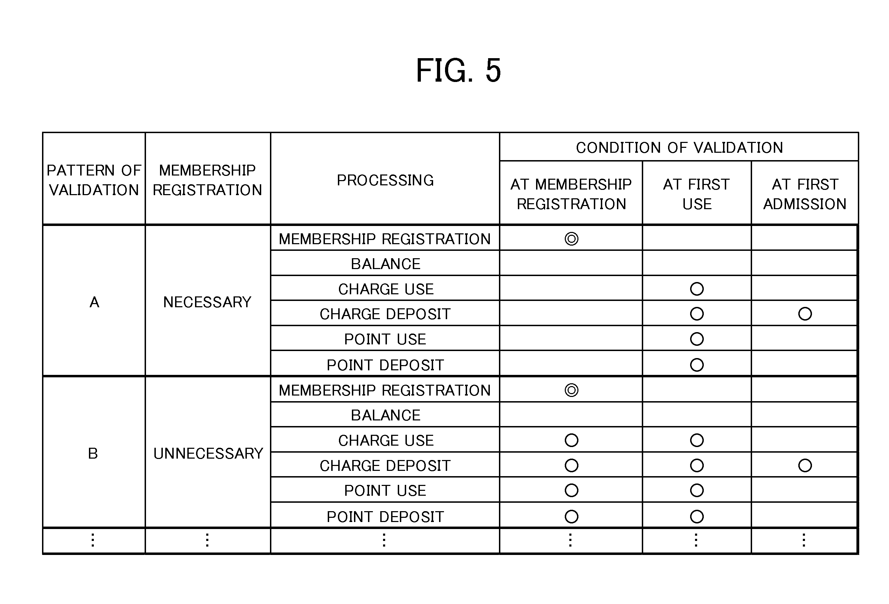

The pattern of validation refers to a pattern of a combination of conditions (hereinafter, called "validation conditions") for determining whether the payment is validated with the validation flag. In the present embodiment, the same pattern of validation is set for each business operator. Details of the pattern of validation will be described below with reference to Fig. 5.

The user registration name is the name of the user as the registration information of the user (who is the holder and the passenger U) of the card medium C associated with the card number.

For example, information of the card medium C corresponding to a card number "01001" is stored in items in a row (the first row of Fig. 4) in which "01001" is stored as the card number. According to the information, it can be seen that, with regard to the card medium C corresponding to the card number "01001", "1000" exists as the number of points (the balance), the validity flag is "○" and thus the payment is validated, "A" is employed as the pattern of validation, and the card is held by a person who has the user registration name of "Taro YAMADA".

Next, specific examples of the validation pattern will be described with reference to Fig. 5.

Fig. 5 is a diagram illustrating the structure of the validation condition table stored in the proprietary-currency storage unit 231 of the storage unit 118 of the proprietary-currency management device 10 of Fig. 2.

The validation condition table is a table that shows the patterns of validation, and in which various types of information including a condition of membership registration, processing, and a condition of validation are stored for each pattern of validation (only patterns "A" and "B" in the example of Fig. 5). Furthermore, the condition of validation is defined by being divided into at the time of membership registration, first use, and first admission. In Fig. 5, when the validation condition in which "⊙ (double circle)" or "○" is stored is satisfied, the card medium C is validated.

Note that an unvalidated card medium C is not available except for balance inquiry. Although the validation is not an essential requirement for the balance inquiry with the card medium C, the balance inquiry is available on the assumption of the membership registration.

Even the unvalidated card medium C can be used from the system side of the proprietary-currency management device 10 and the like, and deposit processing of the unvalidated card medium C is available.

First, a case where the pattern of validation is "A" will be described.

Referring to the validation condition table of Fig. 5, in the case where the pattern of validation is "A", the membership registration is "necessary". That is, in the case where the pattern of validation is "A", use of the card medium C is available on the assumption of "membership registration".

At the time of membership registration, the card medium C is validated at the same time as execution of processing of the "membership registration". Note that, in Fig. 5, "⊙ (double circle)" is described in order to clarify that the processing of the "membership registration" is executed together with validation of the card medium C.

The "membership registration" refers to processing of registration, as a member, in a predetermined group that is managed by a card issuer (mainly the business operator, and the taxi company (company A) in the example of Fig. 4). Note that the "membership registration" and the user registration of the card medium C may be performed together, as takes place in the present embodiment. That is, in the present embodiment, the passenger U registers the user registration name (the name and the like) as the user of the cards C (the cards C corresponding to the card numbers "01001" to "01100" of Fig. 4) issued by the taxi company (company A), so that the membership registration is also performed with the user registration name.

At the time of first use, when any of "charge use", "charge deposit", "point use", and "point deposit" processing is executed on the assumption of the execution of the processing of "membership registration" by a registration operation in a use place (in the taxi that the user U is in, in the example of Fig. 4), the card medium C is validated.

Furthermore, at the time of first deposit, when processing of "charge deposit" is executed on the assumption of execution of the processing of "membership registration", the card medium C is validated.

Next, a case in which the pattern of validation is "B" will be described.

Referring to the validation condition table of Fig. 5, in the case where the pattern of validation is "B", membership registration is "unnecessary". That is, in the case where the pattern of validation is "B", "membership registration" is not necessarily essential in order to use the card medium C.

However, "membership registration" is always accepted, and at the time of membership registration, the card medium C is validated at the same time as execution of the processing of "membership registration".

At the time of first use, when any of the "charge use", "charge deposit", "point use", and "point deposit" processing is executed, the card medium C is validated.

Furthermore, at the time of first deposit, when the "charge deposit" processing is executed, the card medium C is validated.

As described above, in the example of Fig. 5, when the membership registration, the first use, or the charge deposit is performed, the validation condition is satisfied, and the card medium C is validated. Accordingly, the business operator as the issuer of the card medium C can reduce the risk of unconsumed remaining points.

That is, conventionally, a card (conventional electronic money card or the like) associated with the proprietary currency, for example, a card to which P point (1 point = 1 yen) is given is issued in a validated state in advance (in a state where the proprietary currency can be used at any time). Therefore, the issuer of the card needs to prepare stock money of N × P yen at the point of time when the issuer issues N cards (N is one or more arbitrary integer values). To collect the stock money, use of the points with the card is necessary. However, the possibility of use of the card is indefinite, and the risk of unconsumed remaining points of each card (risk that the stock money cannot be collected by the amount of remaining points) is very high.

In contrast, in the present embodiment, although the card medium C is associated with the proprietary currency (point) in advance, at the point of time of issue, the card medium C has not yet been validated (that is, the proprietary currency cannot be used). Therefore, the issuer of the card medium C does not need to prepare the stock money at the point of time of issue of the card medium C. Then, the card medium C is validated at the point of time of the membership registration, first use, or charge deposit, and the stock money is credited to the validated card medium C at that point of time. However, membership registration, first use, or charge deposit has been performed for the validated card medium C, and thus the possibility of use of the proprietary currency (point) is considerably high. Therefore, the risk of there being unconsumed remaining points of the card medium C can be reduced.

Referring back to Fig. 3, the proprietary-currency control unit 202 includes a validity management unit 211 and a proprietary-currency management unit 212.

The validity management unit 211 performs management to validate payment with the proprietary currency associated with each card medium C in advance, based on a predetermined validation condition.

To be specific, the validity management unit 211 determines whether validation has been made about the card medium C corresponding to the card number notified from the tablet terminal 20, by reference to the card number management table of Fig. 4 stored in the proprietary-currency storage unit 231. When the validation flag corresponding to the card number notified from the tablet terminal 20 is ON ("○" in Fig. 4), the validity management unit 211 determines that the validation of the card medium C corresponding to the card number has already been made. In contrast, when the validation flag corresponding to the card number notified from the tablet terminal 20 is OFF ("×" in Fig. 4), the validity management unit 211 determines that the validation of the card medium C corresponding to the card number has not yet been made.

When it is determined that the validation has not yet been made, a series of processing as follows is executed.

That is, the validity management unit 211 recognizes the pattern of validation corresponding to the card number notified from the tablet terminal 20. For example, when the notified card number is "01001", the validity management unit 211 recognizes that the pattern of validation is "A", by reference to the card number management table of Fig. 4 stored in the proprietary-currency storage unit 231.

The validity management unit 211 recognizes the condition of validation in the recognized pattern of validation, by reference to the validation condition table of Fig. 5 stored in the setting condition storage unit 232. The validity management unit 211 then determines whether the recognized condition of validation is satisfied. When the condition of validation is satisfied, the validity management unit 211 validates payment with the proprietary currency on the card medium C corresponding to the card number, by causing the validity flag corresponding to the card number to become ON.

Here, according to the card number management table of Fig. 4, a different pattern of validation is set for each business operator (the company A or the company B) who issues the card medium C. Therefore, the validity management unit 211 can validate the proprietary currency for each business operator who issues the card medium C, as needed.

The proprietary-currency management unit 212 manages addition/subtraction of the amount of the validated proprietary currency, for each card medium C.

The proprietary-currency management unit 212 subtracts the amount of consideration, using the proprietary currency associated with the card medium C, when the consideration of a product or a service (the consideration of the taxi service in the above-described example) is paid with the validated card medium C. To be specific, the proprietary-currency management unit 212 subtracts the number of points corresponding to the amount of money of the product or the amount of the consideration from the number of points stored in the card number management table of Fig. 4 of the proprietary-currency storage unit 231. That is, the number of points (the balance) stored in the card number management table of Fig. 4 is decreased by the amount of the consideration.

The charging unit 203 controls execution of the charging processing of the consideration using the predetermined exchange currency, when the consideration of a product or a service is paid with the predetermined card medium C associated with the proprietary currency validated by the validity management unit. To be specific, in the present embodiment, the charging processing itself is executed by the charging server 30, and thus the charging unit 203 requests the charging server 30 to perform the charging processing, as described above.

The setting unit 204 sets the validation condition for validating the proprietary currency, for each card medium C.

To be specific, the setting unit 204 arbitrarily sets (changes) the condition of validation of the validation condition table of Fig. 5 stored in the setting condition storage unit 232, based on a predetermined operation to the input unit 117.

### [Processing of Proprietary-currency Management Device 10]

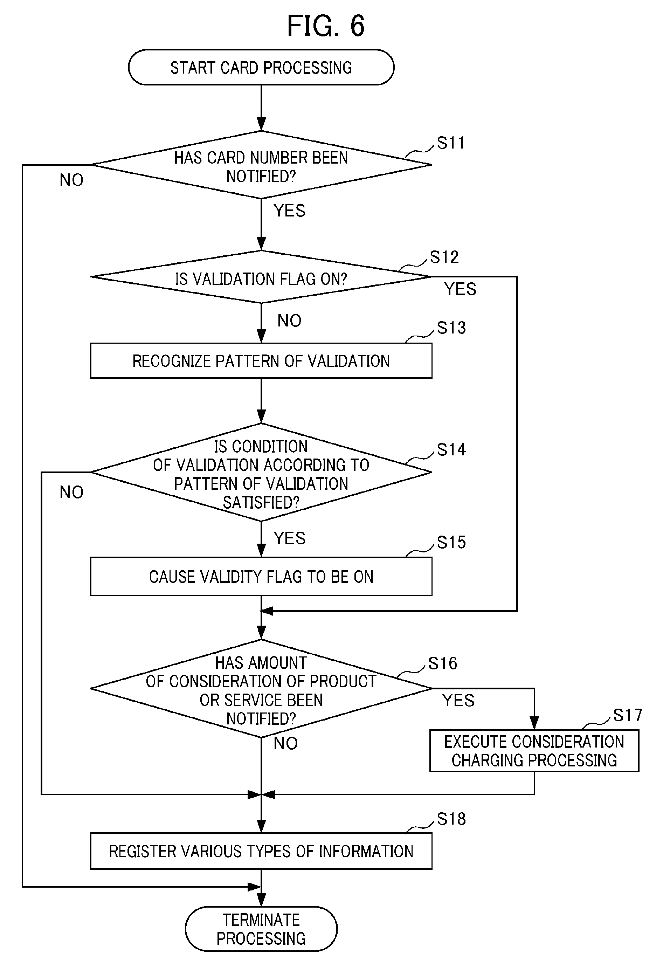

Next, the card processing executed by the proprietary-currency management device 10 having the functional configurations of Fig. 3 will be described with reference to Fig. 6.

Fig. 6 is a flowchart for describing the process of the card processing executed by the proprietary-currency management device 10 of Fig. 2, which has the functional configurations of Fig. 3.

In step S11, the user registration receiving unit 201 determines whether the card number has been notified.

When the card number has not been notified, NO is determined in step S11, and the card processing is terminated.

In contrast, when the card medium C is inserted into the tablet terminal 20, and the card number of the card medium C is transmitted from the tablet terminal 20 to the proprietary-currency management device 10, YES is determined in step S11, and processing proceeds to step S12.

In step S12, the validity management unit 211 determines whether the validation flag is ON, about the card medium C corresponding to the card number notified in step S11. To be specific, in the present embodiment, the validity management unit 211 determines whether the validation flag is ON by recognizing the state of the validation flag corresponding to the card number notified in step S11, by reference to the card number management table of Fig. 4 stored in the proprietary-currency storage unit 231.

When the validity flag is already ON, YES is determined in step S12, and the processing proceeds to step S16. Note that the processing in step S16 and subsequent steps will be described below.

In contrast, when the validation flag is OFF, NO is determined in step S12, and the processing proceeds to step S13.

In step S13, the validity management unit 211 recognizes the pattern of validation. To be specific, in the present embodiment, the validity management unit 211 recognizes the pattern of validation corresponding to the card number notified in step S11, by reference to the card number management table of Fig. 4 stored in the proprietary-currency storage unit 231.

In step S14, the validity management unit 211 determines whether the condition of validation according to the pattern of validation is satisfied. When the condition of validation according to the pattern of validation is not satisfied, NO is determined in step S15, and the processing proceeds to step S18. The processing in step S18 and subsequent steps will be described below.

In contrast, when the condition of validation according to the pattern of validation is satisfied, YES is determined in step S14, and the processing proceeds to step S15.

In step S15, the validity management unit 211 causes the validity flag corresponding to the card number notified in step S11 to be ON. Accordingly, the payment with the proprietary currency with the card medium C corresponding to the card number notified in step S11 is validated.

In step S16, the charging unit 203 determines whether the amount of consideration of a product or a service has also been notified.

To be specific, consider a case in which a fare is presented to the passenger U from the driver T of the taxi at the time of payment of the fare of the taxi. In this case, the fare is notified from the tablet terminal 20 to the proprietary-currency management device 10, as the amount of consideration. Then, the charging unit 203 determines that the amount of consideration of a service has been notified when the information of the fare has been notified from the tablet terminal 20. When it has been determined that the amount of consideration of a product or a service has also been notified, YES is determined in step S16, and the processing proceeds to step S17.

In step S17, the proprietary-currency management unit 212 executes the consideration charging processing. Details of the consideration charging processing will be described below with reference to Fig. 6. When the consideration charging processing is terminated, the processing proceeds to step S18.

When it has been determined that the amount of consideration of a product or a service has not yet been notified, NO is determined in step S16, and the processing proceeds to step S18.

In step S18, the proprietary-currency control unit 202 registers various types of information. For example, the validity management unit 211 stores the received registration information of the user and the information that indicates ON of the validity flag, in the card number management table of Fig. 4.

When this processing is terminated, the card processing is terminated.

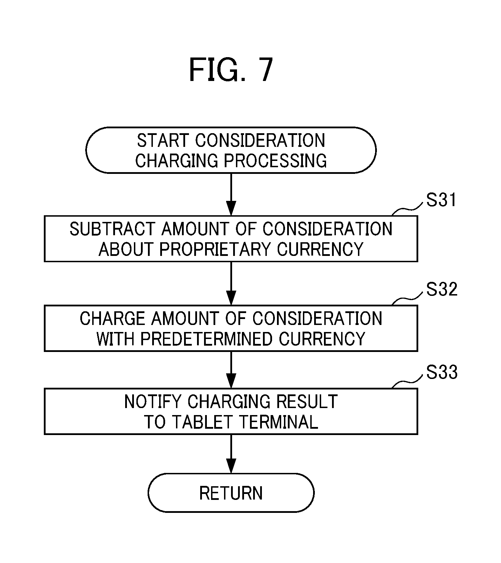

Next, the consideration charging processing performed in step S17 of Fig. 6 will be described with reference to Fig. 7.

Fig. 7 is a flowchart for describing details of the process of the consideration charging processing executed as processing of step S17 of the card processing of Fig. 6.

The consideration charging processing is started upon the determination that the amount of consideration of a product or a service has been notified in step S16 of Fig. 5, and a series of processing as follows is executed.

In step S31, the proprietary-currency management unit 212 subtracts the amount of consideration in the proprietary-currency. To be specific, the proprietary-currency management unit 212 subtracts the number of points corresponding to the amount of money of a product or the amount of consideration notified in step S16 of Fig. 6 from the number of points (the balance) stored in the card number management table of Fig. 4 of the proprietary-currency storage unit 231 (updates the card number management table to reflect the subtraction process).

In step S32, the charging unit 203 requests the charging server 30 to perform the charging processing of charging the amount of consideration with the predetermined exchange currency. When success of the charging has been notified from the charging server 30, the processing proceeds to step S33.

In step S33, the charging unit 203 notifies the charging result to the tablet terminal 20. When the processing is terminated, the consideration charging processing is terminated, that is the processing of step S17 of the card processing of Fig. 5 is terminated, and the processing proceeds to the above-described step S18.

As described above, the proprietary-currency management device 10 of the present embodiment includes the validity management unit 211 and the proprietary-currency management unit 212.

The validity management unit 211 performs management to validate the payment with the proprietary currency associated with each of at least one or more card media C in advance, based on the predetermined validation condition.

The proprietary-currency management unit 212 manages addition/subtraction of the amount of the proprietary currency validated by the validity management unit 211, for each card medium C.

Accordingly, payment with the proprietary currency using the card medium C is validated (permitted) when the predetermined validation condition is satisfied. In other words, use of the proprietary currency associated with the card medium C is prohibited in the unvalidated state, even if unauthorized use of the card medium C by a third party is intended.

Therefore, the business operator or the like who issues the card medium C does not need to pay the consideration of the proprietary currency due to the unauthorized use, and thus can safely distribute the card medium C associated with the proprietary currency in advance, to an unspecified large number of people. As a result, the spreading of the card medium C associated with the proprietary currency in advance can be encouraged, and advertising campaigns of a wide variety of business operators using the card medium C associated with the proprietary currency in advance can be easily realized.

Furthermore, when the predetermined validation condition is satisfied, the card medium C is validated. Accordingly, the business operator as an issuer of the card medium C can reduce the risk of unconsumed remaining points, as described above.

Furthermore, the proprietary-currency management device 10 of the present embodiment also includes the user registration receiving unit 201.

The user registration receiving unit 201 receives registration of the user (the passenger U of Fig. 1, for example) for each card medium C. In this case, the validation condition for validating the proprietary currency can include reception of the registration of the user by the user registration receiving unit 201.

Accordingly, the validation of the payment with the proprietary-currency is only available for the card medium C held by the registered user (the passenger U of Fig. 1, for example). Therefore, the business operator can easily and reliably obtain the information of the registered user.

Furthermore, the proprietary-currency management device 10 of the present embodiment also includes the setting unit 204.

The setting unit 204 can set the predetermined condition for performing the validation of the proprietary currency for each card medium C.

For example, the company A can issue the card medium C included in a first range of card number, and a person B can issue the card medium C included in a second range of card number. In this case, a plurality of business operators can issue the card medium C, by employing an own validation condition.

Furthermore, the validity management unit 211 of the preset embodiment can validate the proprietary currency for each business operator who issues the card medium C.

Accordingly, for example, services of a plurality of business operators can be used with one card medium C. However, the validation of the proprietary currency can be set for each business operator. Therefore, a strategic card operation can be performed such that the card medium C of the company A cannot use the service of the company B.

Furthermore, the proprietary-currency management device 10 of the present embodiment also includes the charging unit 203.

The charging unit 203 controls execution of the charging processing of consideration of a product or a service. When the consideration of a product or a service is paid with the predetermined card medium C associated with the proprietary currency validated by the validity management unit 211, the proprietary-currency management unit 212 subtracts the amount of the consideration using the proprietary currency associated with the predetermined card medium C. Then, the charging unit 203 controls execution of the charging processing of the consideration using the predetermined exchange currency.

Accordingly, when the user (the passenger U of Fig. 1, for example) simply performs the payment of consideration of a product or a service using the card medium C, charging with the predetermined exchange currency can be automatically performed without causing the user to pay any special attention.

Note that the present invention is not limited to the above-described embodiment, and modifications, improvements, and the like within the scope where the objective of the present invention can be achieved are included in the present invention.

In the above-described embodiment, one of the "charge use", "charge deposit", "point use", and "point deposit" having been performed is set as the validation condition, in addition to the processing of the "membership registration". However, the embodiment is not limited to this case. For example, any two of the "membership registration", "charge use", "charge deposit", "point use", and "point deposit" having been performed can be set as the validation condition.

Furthermore, the timing of validation about the card medium C is not especially limited to the above-described embodiment, and any timing may be employed.

That is, it is possible to invalidate the card medium C (cancel the validation) that has once been validated, according to a predetermined condition. It is then possible to validate the card medium C when the validation condition is satisfied again. For example, notification of loss of the card medium C from the user who lost the card medium C is employed as the predetermined condition of invalidation, so that the invalidation of the lost card medium C is performed. Therefore, the unauthorized use of the proprietary currency by a third party can be prevented. Furthermore, when the card medium C is found, the card medium C is just validated again, so that the use of the proprietary currency with the card medium C can be easily resumed. Therefore, it is convenient for the user.

Furthermore, the medium associated with the proprietary currency is the card medium C in the above-described embodiment. However, the medium is not limited to the card medium C, and any storage medium can be employed as long as the storage medium can be associated with the proprietary currency. Note that, as described above, the storage medium does not store the proprietary currency itself, and it is sufficient if the storage medium stores information that can identify the storage medium (the card number in the above-described example).

In other words, the present invention is applicable to a storage medium that can specify or identify an individual person, to be specific, with a magnetic card, an IC card, a mobile information terminal, a USB memory, or the like, by associating the proprietary currency with the storage medium.

Furthermore, in the above-described embodiment, a server has been exemplarily described as the proprietary-currency management device 10 to which the present invention is applied. However, the proprietary-currency management device 10 is not limited to this example.

For example, the present invention can be applied to typical electronic devices. To be specific, the present invention can be applied to a notebook type personal computer, a television receiver, a video camera, a mobile navigation device, a mobile telephone, a portable game device, and the like.

The above-described series of processing can be executed by hardware, or by software.

In other words, the functional configuration of Fig. 3 is merely exemplarily illustrated, and is not especially limited. That is, it is sufficient if a function to execute the entire series of processing is included in the proprietary-currency management device 10, and what kind of function blocks is used to realize the function is not especially limited to the example of Fig. 3.

Furthermore, one function block may be configured from hardware alone, software alone, or a combination of the hardware and the software.

When the series of processing is executed by software, a program that configures the software is installed onto a computer or the like from the network or a recording medium.

The computer may be a computer incorporated in dedicated hardware. Furthermore, the computer may be a computer that can execute various functions, by having various programs installed.

The recording medium that includes such a program is configured from not only the removable medium 131 of Fig. 2, which is distributed separately from the device main body, in order to provide the program to the user, but also a recording medium or the like provided to the user in a state of being incorporated in the device main body in advance. The removable medium 131 is configured from, for example, a magnetic disk (including a floppy disk), a Blu-ray disc (registered trademark), an optical disk, or a magneto-optical disk. The optical disk is configured from a compact disk-read only memory (CD-ROM), a digital versatile disk (DVD), or the like. The magneto-optical disk is configured from a mini disk (MD), or the like. Furthermore, the recording medium provided to the user in a state of being incorporated in the device main body in advance is configured from the ROM 112 of Fig. 2, a hard disk included in the storage unit 118 of Fig. 2, or the like.

Note that, in the present specification, the steps that describe the program recorded in the recording medium include not only processing performed in consecutively in time, but also processing executed in parallel or in a separate manner, even if the processing is not necessarily performed in a time series.

Furthermore, in the present specification, the terms of the system mean a general device configured from a plurality of devices, a plurality of means, or the like.

### EXPLANATION OF REFERENCE NUMERALS

111 CPU, 112 ROM, 113 RAM, 114 Bus, 115 Input/output interface, 116 Output unit, 117 Input unit, 118 Storage unit, 119 Communication unit, 120 Drive, 131 Removable medium, 201 User registration receiving unit, 202 Proprietary-currency control unit, 203 Charging unit, 204 Setting unit, 211 Validity management unit, 212 Proprietary-currency management unit, 231 Proprietary-currency storage unit, 232 Setting condition storage unit

## Claims

1. A proprietary-currency management device comprising:
validity management means configured to perform management to validate payment with a proprietary currency associated with each of at least one or more storage media in advance, based on a predetermined condition; and
proprietary-currency management means configured to manage addition/subtraction of an amount of the proprietary currency validated by the validity management means for each of the storage media.

2. The proprietary-currency management device according to claim 1, further comprising:
user registration receiving means configured to receive registration of a user for each of the storage media, wherein
the predetermined condition for validating the proprietary currency includes reception of the registration of the user by the user registration receiving means.

3. The proprietary-currency management device according to claim 1 or 2, further comprising:
setting means configured to set the predetermined condition for validating the proprietary currency for each of the storage media.

4. The proprietary-currency management device according to any one of claims 1 to 3, wherein
the validity management means validates the proprietary currency for each business operator who issues the storage medium.

5. The proprietary-currency management device according to any one of claims 1 to 4, further comprising:
charging means configured to control execution of charging processing of consideration of a product or a service, wherein,
when the consideration of a product or a service is paid with a predetermined storage medium associated with the proprietary currency validated by the validity management means,
the proprietary-currency management means subtracts an amount of the consideration using the proprietary currency associated with the predetermined storage medium, and
the charging means controls the execution of charging processing of the consideration using a predetermined exchange currency.

6. A proprietary-currency management method executed by a proprietary-currency management device that manages a proprietary currency, the method comprising:
a validity management step of performing management to validate payment with the proprietary currency associated with each of at least one or more storage media in advance based on a predetermined condition; and
a proprietary-currency management step of managing addition/subtraction of the amount of the proprietary currency validated in the validity management step for each of the storage media.

7. A program for causing a computer that executes control of managing a proprietary currency to function as:
validity management means configured to perform management to validate payment with a proprietary currency associated with each of at least one or more storage media in advance based on a predetermined condition; and
proprietary-currency management means configured to manage addition/subtraction of the amount of the proprietary currency validated by the validity management means for each of the storage media.
